Europäisches Patentamt

European Patent Office

Office européen des brevets

(11) Publication number: **0 123 712**
A1

## (12) EUROPEAN PATENT APPLICATION

(21) Application number: **83104351.8**

(51) Int. Cl.³: **B 62 D 63/06**

(22) Date of filing: **03.05.83**

(43) Date of publication of application: **07.11.84**
**Bulletin 84/45**

(84) Designated Contracting States: **CH DE FR GB LI SE**

(71) Applicant: **YAMAHA HATSUDOKI KABUSHIKI KAISHA,
2500 Shingai, Iwata-shi Shizuoka-ken (JP)**

(72) Inventor: **Suzuki, Naoto, 4-12-15, Kamoe,
Hamamatsu-shi Shizuoka-ken (JP)**
Inventor: **Kobayashi, Noboru, 4726 Magoori-cho,
Hamamatsu-shi Shizuoka-ken (JP)**

(74) Representative: **Patentanwälte Grünecker, Dr.
Kinkeldey, Dr. Stockmair, Dr. Schumann, Jakob, Dr.
Bezold, Meister, Hilgers, Dr. Meyer-Plath,
Maximilianstrasse 58, D-8000 München 22 (DE)**

(54) **Small-sized trailer.**

(57) A small-sized trailer has two supporting members (4) which are disposed at two widthwise portions and protruding to the front portion of a truck. Connected to the supporting members is a connecting member (5) and a vertical pin (60) is fixed in the connecting member. Two paired wheels (30) are mounted to an axle (30) which is offset in a horizontal direction from said vertical pin (60). The truck is supported by said paired wheels such that it can turn by 360 degrees around said vertical pin.

EP 0 123 712 A1

May 3, 1983    0123712

GRÜNECKER, KINKELDEY, STOCKMAIR & PARTNER

PATENTANWÄLTE
EUROPEAN PATENT ATTORNEYS

A. GRÜNECKER, DIPL-ING
DR. H. KINKELDEY, DIPL-ING
DR. W. STOCKMAIR, DIPL-ING.AE E (CALTECH)
DR. K. SCHUMANN, DIPL-PHYS
P. H. JAKOB, DIPL-ING
DR. G. BEZOLD, DIPL-CHEM
W. MEISTER, DIPL-ING
H. HILGERS, DIPL-ING
DR. H. MEYER-PLATH, DIPL-ING

8000 MÜNCHEN 22
MAXIMILIANSTRASSE 43

# SMALL-SIZED TRAILER

The present invention relates to a small-sized trailer which is compact and has an excellent running performance.

A trailer in current use is equipped with two or more wheels at both the sides of a truck and is connected to a rear portion of an automobile by means of a ball joint. If pushed in the wrong direction during the backward run, however, the trailer is turned so much that it hits the rear end portion of the tractor. In order to obviate this, the length to a rear axle has to be enlarged by the ball joint so that the operation may be made insensitive to provide a time lapse for the operation. Nevertheless, it is impossible for a small trailer to adopt such construction. As a result, the existing trailer has bad running performance and requires special handling.

The present invention has been conceived to eliminate the disadvantages concomitant with the prior art and contemplates improving the running performance thereby to make any special handling unnecessary.

According to the present invention, there is provided a small-sized trailer comprising: two supporting members disposed at two widthwise portions and protruding to the front portion of a truck; and connecting portions for a tractor formed at the front end portions of said supporting members, said small-sized trailer being characterized in that said truck is so supported by wheels that it can turn around one vertical pin, and in that said vertical pin and an axle are offset in a horizontal direction.

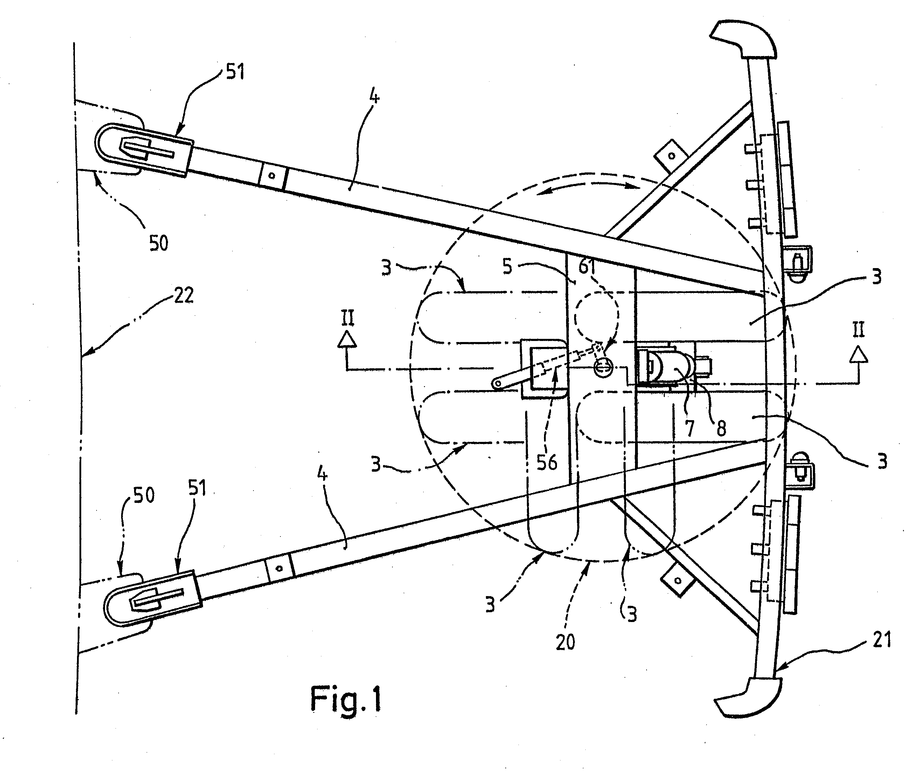

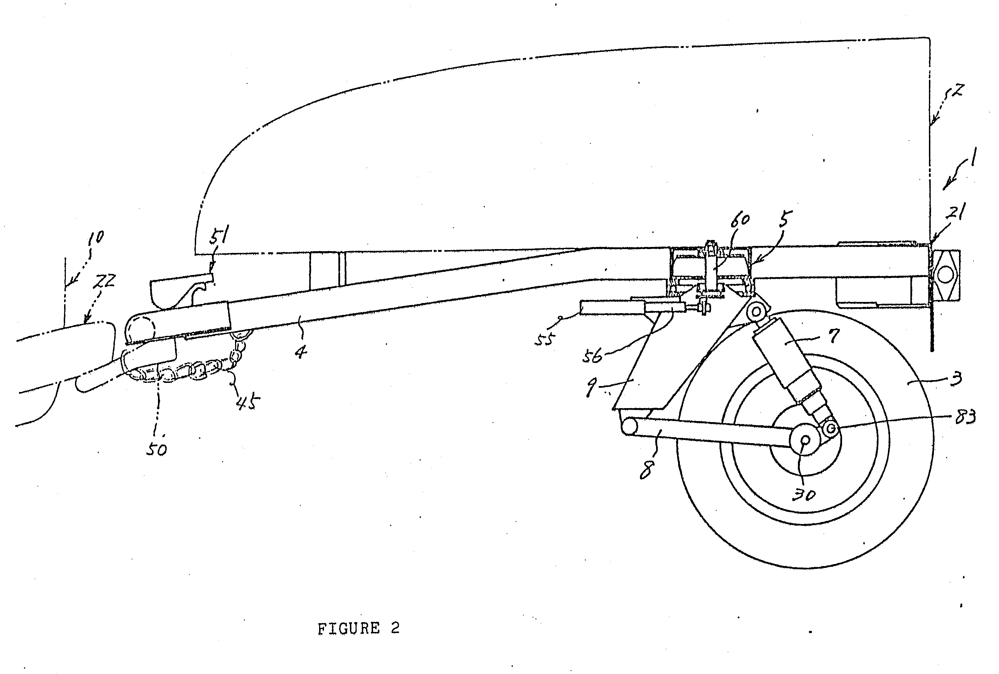

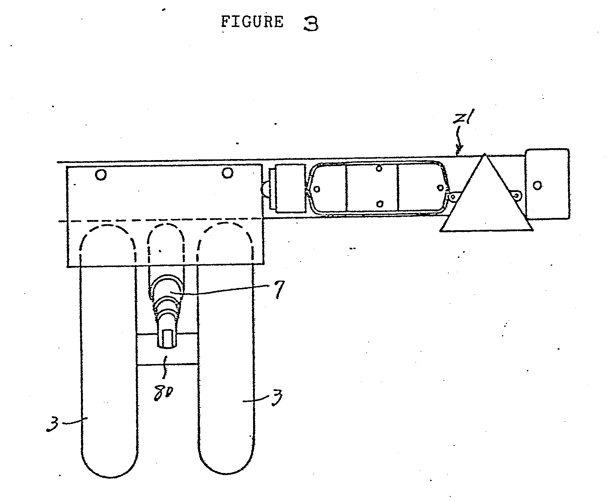

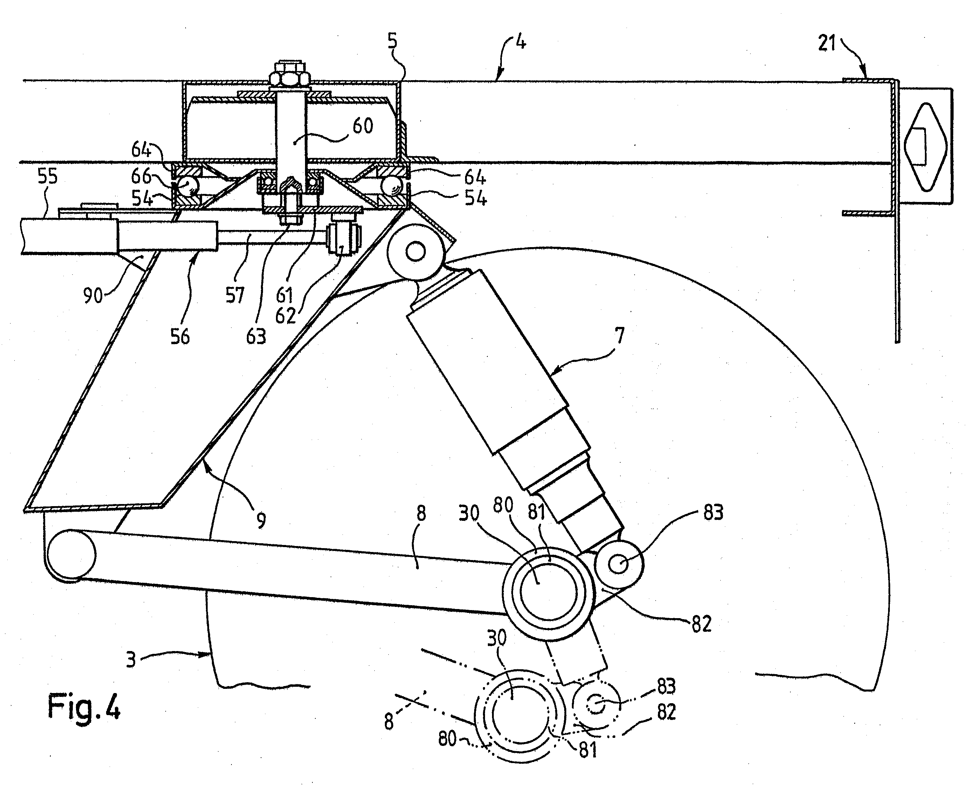

The present invention will be described in the following in connection with the embodiment thereof with reference to the accompanying drawings. In these drawing Fig.1 is a top plan view showing the embodiment of the present invention; Fig. 2 is a section taken along line II - II of the same; Fig. 3 is a back view of the same; and Fig. 4 is a partially enlarged sectional view of Fig. 2. As shown in the Figures a small-sized trailer 1 has its truck constructed such that a pair of wheels 3 are attached to a truck body 2 (Fig. 2) and such that two widthwise supporting members 4 are so attached to that truck as to protrude to the front of the truck. The supporting members 4 are formed at their respective front end portions with connecting portions 51 so that the truck is joined to the bumper 22 of a tractor 10 by means of not only those connecting portions 51 but also joint members 50. The supporting members 4 are joined at their rear end portions by means of a bumper 21 and at their fronts by means of a connecting member 5 thereby to form the base portion of the truck, and a vertical pin 60 is fixed in the connecting member 5. An arm 61 is fixed to the lower end portion of the pin 60 by means of a bolt 63, whereas a ball bearing seat 64 surrounding the pin 60 is attached to the lower end of the connecting member 5.

0123712

The paired wheels 3 are attached in the vicinity to each other to both the end portions of an axle 30, on which there is fitted through a bearing 81 a sleeve 80 to which a bracket 9 is joined through a fork 8 and a damper 7. This joint between the sleeve 80 and the damper 7 is effected by joining the damper 7 in a rotatable manner through a pin 83 to an arm 82 formed on the sleeve 80. The bracket 9 is formed at its upper end portion with a ball bearing seat 54, which faces the ball bearing seat 64 through balls 66. At the same time, the pin 60 extends through the center of the bearing seat 54 such that the bearing seat 54 can rotate around the pin 60 and such that the load upon the truck is transmitted through that bearing portion to the wheels 3. In Fig. 4, solid lines indicate the axle portion in the maximum load state whereas phantom lines indicate the axle portion in the state without any load.

On the other hand, the axle 30, which is joined to the bearing seat 54 through the bracket 9, the fork 8 and the damper 7, is also made rotatable around the pin 60 so that the locus of rotation of the wheels 3 does not extend outward from the truck, as indicated by circle 20 in Fig. 1. To the bracket 9, moreover, there are attached through a rib 90 and a holder 55 a cylinder 56 the rod 57 of which has its leading end portion joined to a retaining portion 62 at the leading end of the arm 61 so that the operation of the so-called "shimmy damper" can be achieved.

The construction thus far described is enabled to enjoy a simple construction substantially similar to that of a one-wheeled vehicle, because the paired wheels are arranged close to each other, so that it can be remarkably conveniently used as a trailer merely by retaining the connecting portions on the tractor. Since the connections are effected at the two widthwise portions, moreover, the the trailer can be prevented without fail from turning over. Upon the running operation around a corner, still moreover, the trailer is enabled to follow the directional change of the tractor by the restrictions of the two connection portions. As a result, the tread of the trailer can be prevented from coming remarkably inside of the tread of the tractor. During the backward run, furthermore, the restrictions at the two connecting portions prevent only the trailer from being excessively turned to hit its tractor. Furthermore, the wheels 3 can have their direction freely changed because they have the so-called "swivel construction", in which they can turn around the pin 60. As a result of the extension and contraction of the rod 57, more specifically, the bracket 9 is made integral with the cylinder 56 and the wheels 30 can turn by 360 degrees with respect to the fixed pin 60 and the arm 61. Furthermore, the tread of the wheels 3 can be confined within the truck, as shown in Fig. 1, thereby to raise no obstruction against any large turn.

On the other hand, the construction of the present invention can not only exhibit the function as the one-wheeled vehicle, as has been described hereinbefore, but also stably receive the load because it has two wheels.

As has been described hereinbefore, according to the present invention, there is provided the small-sized trailer comprising: the two supporting members disposed at the two widthwise portion and protruding to the front portion of the truck; and the connecting portions for a tractor formed at the front end portions of the supporting members, said small-sized trailer being characterized in that the truck is so supported by the wheels that it can turn around the vertical pin, and in that the vertical pin and the axle are offset in the horizontal direction. Thus, the trailer of the

0123712

present invention can enjoy the compact constuction and can be prevented from hitting the tractor even if it turns excessively during its backward run.  As a result, it is convenient as a small-sized trailer for loads, which is excellent in its running performance without requiring any special handling.

CLAIMS:

1. A small-sized trailer comprising: two supporting members (4) disposed at two widthwise portions (21,22) and protruding to the front portion of a truck (2); and connecting portions for a tractor (10) formed at the front end portions of said supporting members, characterized in that said truck is so supported by wheels(3) that it can turn around one vertical pin (60); and in that said vertical pin and an axle (30) for mounting said wheels(30) are offset in a horizontal direction.

2. A small-sized trailer as set forth in Claim 1, characterized in that said paired wheels (30) are rotatably attached in the vicinity of each other to both the end portions of said axle (30) and in that said truck (2) is so supported by said paired wheels that it can turn by 360 degrees around said vertical pin (60).

Fig.1

FIGURE 2

FIGURE 3

Fig.4

4/4

0123712

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | US-A-2 582 716 (E.M. NELSON) <br> * Complete document * | 1,2 | B 62 D 63/06 |
| Y | FR-A-2 138 395 (A. CORBAULT) <br> * Claims 1, 5 * | 2 | |
| A | US-A-3 917 316 (R.P. FURNISH) <br> * Claim 1 * | 1 | |
| A | US-A-1 992 808 (A.C. BISCHOFF) <br> * Page 1, left-hand column, line 42 - right-hand column, line 13; figure 1 * | 1 | |
| A | US-A-1 401 786 (H. KAPFERER) <br> * Page 2, lines 83-120; page 4, lines 54-67; figures * | 1,2 | |
| A | DE-C-1 103 768 <br> (FAHRZEUGAUSSTATTUNG GMBH) | | TECHNICAL FIELDS SEARCHED (Int. Cl. 3) <br><br> B 62 D 21/18 <br> B 62 D 63/00 <br> B 60 P 1/42 |
| A | US-A-2 033 298 (A.R. PRIBIL) | | |
| A | GB-A- 476 593 (S. SILVERSTEIN) | | |

The present search report has been drawn up for all claims

| Place of search <br> BERLIN | Date of completion of the search <br> 25-11-1983 | Examiner <br> PETTI P |
|---|---|---|